# EUROPEAN PATENT SPECIFICATION

(11) **EP 2 631 643 B1**
(45) Date of publication and mention of the grant of the patent: **08.07.2015**
(21) Application number: 13155920.5
(22) Date of filing: 20.02.2013
(51) Int. Cl.: G01N 30/90, G01N 35/00, G08C 17/02

(54) **Chromatographic measurement apparatus**
Chromatografische Messvorrichtung
Appareil de mesure chromatographique

(30) Priority: 23.02.2012 JP 2012037175
(43) Date of publication of application: 28.08.2013
(60) Divisional application: 14194915.6
(73) Proprietor: Fujifilm Corporation, Minato-ku Tokyo (JP)
(72) Inventor: Nishio, Tomonori, Kanagawa-ken (JP)
(74) Representative: Hoffmann Eitle

(56) References cited:
- EP-A2- 2 309 256
- WO-A2-2007/028130
- CN-U- 201 697 901
- JP-U- 3 142 066
- US-A1- 2007 266 857

## Description

### Field of the Invention

The present invention relates to a chromatographic measurement apparatus, which uses an insoluble carrier including a detection area capable of specifically immobilizing a test article contained in a sample solution to detect the test article.

### Description of the Related Art

In recent years, chromatographic measurement methods are being developed, wherein a solution (sample solution) containing a sample that possibly contains a test article is fed to an insoluble carrier and an immunological measurement method, for example, is used to achieve easy and quick measurement about the presence or absence of the test article and/or the amount thereof. Further, an immuno-chromatographic measurement apparatus (immuno-chromato-reader), which is a measurement apparatus for easily achieving the chromatographic measurement, is disclosed in U.S. Patent Application Publication No. 20110072885 (hereinafter, Patent Document 1), for example. This immuno-chromatographic measurement apparatus measures an amount of developed color of a reagent at a detection area of a device loaded therein, thereby allowing to achieve highly sensitive and highly reliable measurement of even an amount of developed color which is difficult to be determined by visual observation.

Further documents are CN 201 697 901 U and JP 3 142066 U.

### SUMMARY OF THE INVENTION

However, conventionally, in a case where a test for an infectious disease is conducted, risk of contamination of testing equipment by a pathogen hinders introduction of the chromatographic measurement apparatuses as described above.

This is because that, if the chromatographic measurement apparatus is used to conduct a test and the test result is positive, it is necessary to apply an appropriate disinfectant treatment to the apparatus used for the test so that the apparatus will not be a new source of infection. For example, in a case where a test for a reportable communicable disease regulated by the Act on Domestic Animal Infectious Diseases Control is conducted, a strict disinfectant treatment (such as immersion in a disinfectant solution, disinfection with high-temperature and high-pressure steam, or the like) of used testing equipment is required after the test, and the testing equipment may go out of order or be damaged by the disinfectant treatment. Further, in a case where it is necessary to quickly conduct tests simultaneously at multiple places because of high infectiveness of a disease, many chromatographic measurement apparatuses are necessary, and the above-described problem of economic efficiency is significant.

In view of the above-described circumstances, the present invention is directed to providing a chromatographic measurement apparatus, which ensures high economic efficiency even when the apparatus is used at a place with risk of contamination of testing equipment during a chromatographic measurement.

In order to address the above-described problem, the chromatographic measurement apparatus according to the invention is a chromatographic measurement apparatus according to claim 1.

Further preferred embodiments are mentioned in dependent claims 2-3.

### BRIEF DESCRIPTION OF THE DRAWINGS

FIG. 1 is a schematic diagram illustrating the appearance configuration of a chromatographic measurement apparatus according to an embodiment of the present invention,
FIG. 2 is a schematic diagram illustrating the internal configuration and non-contact connection of the chromatographic measurement apparatus according to the embodiment of the present invention,
FIG. 3 is a schematic diagram illustrating the appearance configuration of a measurement unit of the chromatographic measurement apparatus,
FIG. 4 is a schematic diagram illustrating the internal configuration of the measurement unit of the chromatographic measurement apparatus,
FIG. 5 is a schematic diagram illustrating how an apparatus main body and the measurement unit communicate via wireless communication,
FIG. 6A is a schematic plan view illustrating an assay device, which is loaded in the measurement unit,
FIG. 6B is a schematic bottom view illustrating the assay device, which is loaded in the measurement unit, and
FIG. 6C is a schematic sectional view illustrating a cross-section of the assay device taken along the line II-II in FIG. 6A.

### DESCRIPTION OF THE PREFERRED EMBODIMENTS

Hereinafter, an embodiment of the present invention will be described with reference to the drawings, which are not intended to limit the invention. For ease of visual recognition, components shown in the drawings are not to scale.

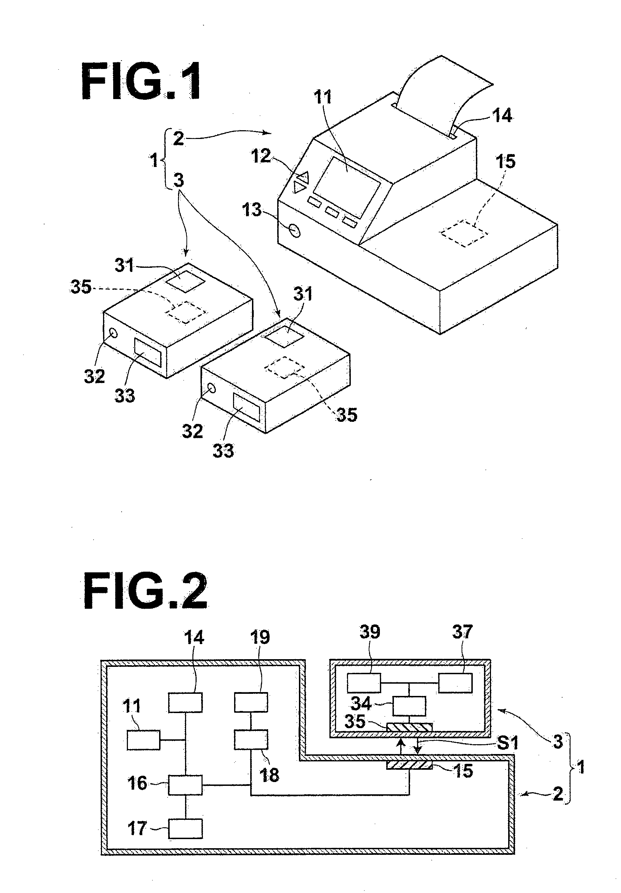

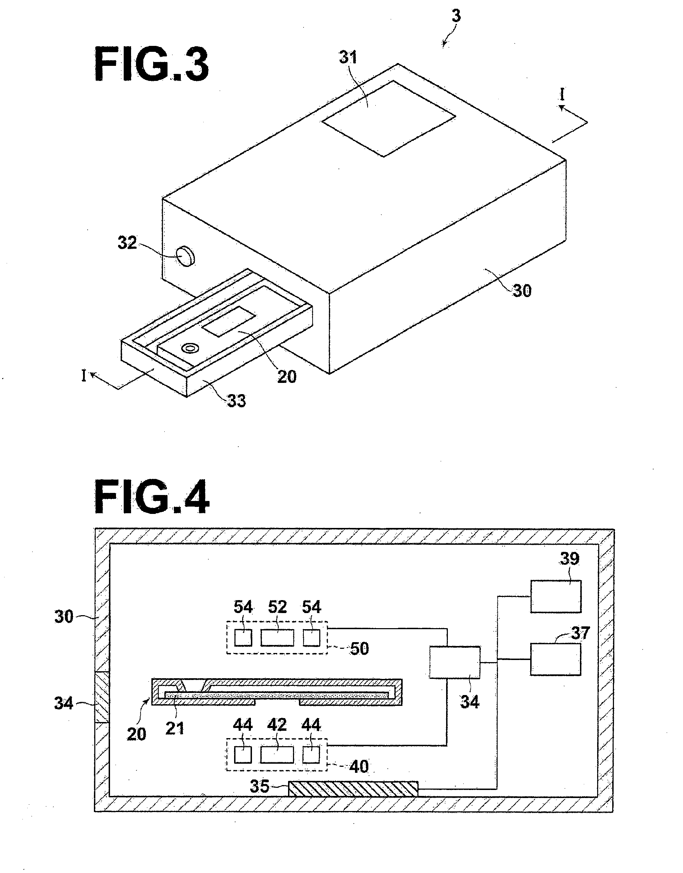

FIGs. 1 and 2 are schematic diagrams illustrating the appearance configuration and the internal configuration of a chromatographic measurement apparatus 1 according to an embodiment of the present invention, respectively. FIGs. 3 and 4 are schematic diagrams illustrating the appearance configuration and the internal configuration of a measurement unit of the chromatographic measurement apparatus, respectively.

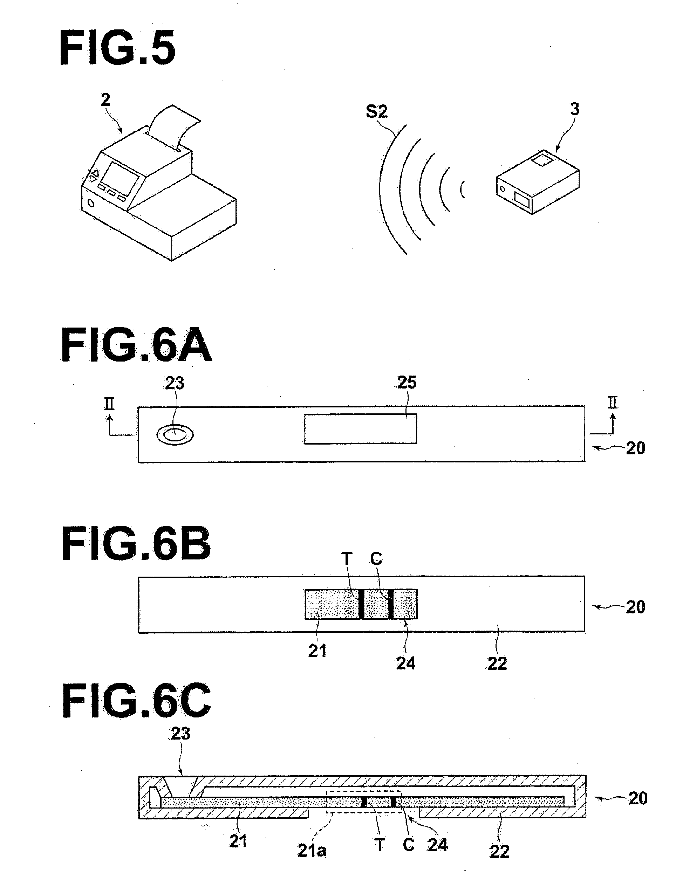

As shown in FIGs. 1 and 2, the chromatographic measurement apparatus 1 of this embodiment includes an apparatus main body 2 and at least one measurement unit 3. As shown in FIG. 5, the apparatus main body 2 and the measurement unit 3 are capable of communicating measurement information (a signal S2) including a test result via wireless communication between the apparatus main body 2 and the measurement unit 3. Although two measurement units 3 are provided in the example shown in FIG. 1, the number of the measurement unit 3 of the invention is not limited to two.

### Apparatus main body

The apparatus main body 2 aggregates measurement information, pairing setting information, etc., and stores and manages the information. The apparatus main body 2 includes, for example, a display section 11, a menu operation section 12, a power switch 13 and a printing section 14 as the appearance configuration, and a first connecting section 15, a memory 17, an extracting section 18, a receiving section 19 and a control section 16 for controlling these components as the internal configuration.

The apparatus main body 2 is powered on when the power switch 13 is pressed down. The display section 11 displays a setting screen, a result of measurement, etc., of the measurement apparatus 1. By operating buttons disposed at the menu operation section 12, operations, such as changing the displayed screen, setting test conditions, etc., can be performed. The printing section 14 is provided with a roll of paper in advance, and the printing section 14 functions, for example, as a thermal printer. The printing section 14 can print a list of test results, for example.

The first connecting section 15 allows pairing setting between the apparatus main body 2 and a certain one of the measurement unit 3 when a non-contact proximity connection is established between the first connecting section 15 and a second connecting section 35 of the measurement unit 3. The term "non-contact" herein refers to a state where the measurement unit 3 is not directly electrically connected to the apparatus main body 2. The term "proximity connection " herein refers to that the second connecting section 35 of the measurement unit 3 is in a proximity (within 50 cm, for example) of the first connecting section 15 of the apparatus main body 2 and communication of information can be performed between the second connecting section 35 and the first connecting section 15. The means for allowing such non-contact proximity connection is not particularly limited, and any known technique may be used. An example of the means for allowing the non-contact proximity connection may be forming a capacitor as a circuit element. In this case, the capacitor is formed by using the first connecting section 15 and the second connecting section 35 as electrodes and disposing them to face each other. As another example, NFC (Near Field Communication) non-contact communication technology, which is often used with IC (integrated circuit) cards, etc., may be used. In this case, for example, the first connecting section 15 is used as a reader/writer terminal and the second connecting section 35 is used as a coil antenna to achieve the communication of information.

By allowing to establish the non-contact proximity connection between the apparatus main body 2 and the measurement unit 3 via the first connecting section 15 and the second connecting section 35, as described above, the pairing setting and communication of other signals S1 (FIG. 2) can be achieved even when the apparatus main body 2 is sealed in a container or a bag, for example. When the pairing setting is achieved, an ID number of the measurement unit 3, which is stored in a memory 37, for example, is read out and is stored in the memory 17 as pairing setting information and is managed by the apparatus main body 2. The term "pairing" herein refers to making devices, which can communicate with each other via wireless communication, authenticate each other prior to establishing connection.

The memory 17 stores the measurement information obtained by the measurement unit 3, the pairing setting information, etc.

The receiving section 19 receives a radio signal transmitted from the measurement unit 3. The received signal is outputted to the extracting section 18.

The extracting section 18 extracts, from the signal S2 obtained via wireless communication, a signal from the measurement unit 3 which is paired with the apparatus main body 2 based on the pairing setting information. In a case where it is necessary to immediately perform tests simultaneously at multiple places, a plurality of apparatus main bodies 2 are used, and different measurement units 3 are paired with the apparatus main bodies 2. In such a case, each apparatus main body 2 first extracts, from the received signal, a signal from the measurement unit 3 that is paired with the apparatus main body 2. The extraction of the signal may be achieved, for example, by comparing the ID number of the measurement unit 3 which has sent the signal S2 (the ID number is contained in the signal) with the ID number of the paired measurement unit 3, which is stored in the apparatus main body 2, based on the pairing setting information. Then, for example, only the measurement information from the extracted signal is stored in the memory 17 of the apparatus main body 2. It should be noted that the extracting section 18 may extract a signal from a measurement unit that is not paired with the apparatus main body 2 from the received signal, as necessary.

The control section 16 controls the apparatus main body 2. Further, in this embodiment, the control section 16 controls the apparatus main body 2 to issue a warning when it is determined that the measurement unit 3 having a positive detection history has approached to the apparatus main body 2, based on the content (the positive detection history) and intensity of the radio signal. The type of the warning is not particularly limited, and may be in the form of a warning display that is displayed on the display section 11 or a sound, for example. With this configuration, the operator of the apparatus main body 2 can be notified that the measurement unit 3 which may possibly be a source of infection has approached to the apparatus main body 2, thereby preventing the spread of infection.

### Measurement unit

The measurement unit 3 is a component for actually conducting a test about whether or not a certain test article is contained in a sample solution by using a chromatographic device 20. The measurement unit 3 includes, for example, a housing 30, a positive detection history display section 31, an open/close switch 32 and a device loading section 33 as the appearance configuration, and the second connecting section 35, the memory 37, a transmitting section 39, an image obtaining section 40, an information reading section 50 and a control section 34 for controlling these components as the internal configuration.

The sample solution which can be measured is not particularly limited, as long as the solution possibly contains the test article (such as a pathogen, or a physiologically active substance or an environmental pollutant, such as a natural product, a toxin, a hormone or an agricultural chemical) . Examples of the sample solution may include biological samples, in particular, body fluids (such as blood, blood serum, blood plasma, spinal fluid, tear, sweat, urine, pus, snivel and sputum), bodily wastes (such as feces), organ, tissue, mucosa and skin of an animal (in particular, human), a swab sample or a gargle fluid which possibly contain such a body fluid or a bodily waste, or a dilution of an animal or a plant itself or a dried body thereof diluted with a diluting fluid.

Further, as shown in FIGs. 6A, 6B and 6C, the device 20 includes: an insoluble carrier 21 having a test line T and a control line C; a device housing 22 for containing the insoluble carrier 21; a solution injection port 23 for injecting a reagent solution into the insoluble carrier 21; an observation window 24 for observing an area 21a around the test line of the insoluble carrier 21 contained in the device housing 22; and an information display area 25 disposed at the surface of the device housing 22.

On the information display area 25, information about the test is displayed in the form of hand-written information or a sticker including the information. The information about the test may include, for example, information about a patient or a living being from which the sample has been collected (such as the name or species and the collection site), and information about the sample or reagent used in the test (such as the name of the sample to be tested), etc.

The positive detection history display section 31 displays, when a positive test result is obtained at the measurement unit 3 including the display section 31, an indication to that effect. The manner of display is not particularly limited and any known technique may be used. Since the measurement unit 3 having the positive test result may possibly be a new source of infection, it is necessary to handle the measurement unit 3 carefully. The display on the positive detection history display section 31 can call the attention of the operator to the measurement unit 3, thereby effectively preventing spread of secondary infection. Further, the presence of the measurement unit 3 having the positive test result directly leads to spread of contamination risk, and therefore it may be preferred that the positive detection history is displayed in an undeletable manner. For example, display using a thermal recording system, or a system where the color or the density of the color at the surface of the device is changed by breaking a bag containing a chemical, which is provided in the device in advance, may be used.

The device loading section 33 receives the device 20 loaded therein, and opens or is closed when the open/close switch 32 is pressed down.

The image obtaining section 40 obtains an image of the area 21a around the test line through the observation window 24 of the device 20. The image obtaining section 40 corresponds to an image obtaining means according to the invention. Based on this image, optical information at the area 21a around the test line is obtained. As shown in FIG. 4, the image obtaining section 40 includes an image sensor 42 and a light source 44, and is configured such that the image sensor 42 and the light source 44 are positioned below the device 20 and face the observation window 24 when the device 20 is loaded in the measurement apparatus 1. Then, the image obtaining section 40 obtains the image of the area 21a around the test line with the image sensor 42 while illuminating the area with the light source 44. This allows the operator to understand development of the sample solution in the insoluble carrier 21 over time based on a plurality of images. In order to reduce wasted work by the operator, it may be preferred that a longer interval between image obtaining operations may be set until the front line of development of the sample solution is observed through the observation window 24, and a shorter interval between the image obtaining operations may be set after the front line of development of the sample solution has been observed through the observation window 24. Data of the images obtained by the image obtaining section 40 is sent to the memory 37. As described later, a developing speed of the sample solution, an amount of developed color at the test line T, etc., are calculated based on the images.

The image sensor 42 may include, for example, a line sensor or an area sensor formed by a number of one-dimensionally or two-dimensionally arranged photodiodes, or an optical sensor, such as a CCD, and generates an output corresponding to the luminance of received light. A light-receiving range of the image sensor 42 may, for example, be a zonal range extending in the longitudinal direction of the device 20. The light source 44 may, for example, be a module including a LED, and is configured to emit white light. Alternatively, the light source 44 may emit monochromatic light, for example. Still alternatively, the light source 44 may include a plurality of modules that emit monochromatic light of different wavelengths. The light emitted from the light source 44 can illuminate an area in the longitudinal direction of the device 20.

The information reading section 50 applies illumination light to the information display area 25 of the device 20 and obtains the information displayed on the information display area 25. The method used to obtain the information is not particularly limited, and the information on the information display area 25 may be obtained by imaging the information, or by reading the information in the form of a bar code. As shown in FIG. 4, the information reading section 50 includes an image sensor 52 and a light source 54, and is configured such that the image sensor 52 and the light source 54 are positioned above the device 20 and face the information display area 25 when the device 20 is loaded in the measurement apparatus 1. Then, the information about the test obtained by the information reading section 50 is associated with the test result and managed. Data of the information obtained by the information reading section 50 is sent to the memory 37. Explanations of the image sensor 52 and the light source 54 are the same as the above-described explanations of the image sensor 42 and the light source 44, respectively.

The memory 37 stores the data of the images obtained by the image obtaining section 40, the data of the information obtained by the information reading section 50, etc. Further, the memory 37 is configured to be able to read out the stored data in response to a request from the control section 34, for example. In this embodiment, the measurement information, such as the data of the stored images, is transmitted via a radio signal from the transmitting section 39 to the apparatus main body 2.

The transmitting section 39 transmits a radio signal to the apparatus main body 2. The radio signal may contain the measurement information, the ID number of the measurement unit 3, to which the transmitting section 39 belongs, the positive detection history, etc.

Now, a chromatographic measurement method using the above-described chromatographic measurement apparatus 1 is described. In the chromatographic measurement method, first, a sample solution that possibly contains a test article is fed to the device 20, which has the test line T (detection area) and the control line C for determining the end of measurement, and then, the device 20 is loaded in the measurement unit 3. Then, the sample solution is let to develop in the insoluble carrier 21. The measurement unit 3 calculates the amount of developed color at the test line T based on the images of the area 21a around the test line obtained by the image obtaining section 40, and determines whether the test article is detected (positive) or not (negative) based on the amount of developed color. Then, the measurement unit 3 transmits the thus obtained measurement information to the apparatus main body 2.

As described above, the chromatographic measurement apparatus according to the invention is, in particular, characterized by that the apparatus main body and the measurement unit are configured to be capable of wireless communication and capable of mutual pairing setting. This allows the apparatus main body to be used in a state where the apparatus main body is located at a place free of contamination risk or sealed to be free of contamination risk, so that only the measurement unit needs to be subjected to a disinfectant treatment. As a result, higher economic efficiency can be ensured even when the apparatus is used at a place with risk of contamination of testing equipment during a chromatographic measurement.

The measurement unit can be subjected to the disinfectant treatment on the spot when the test ends, thereby allowing to prevent the spread of contamination risk.

Further, since the communication of information between the apparatus main body and the measurement unit is achieved via wireless communication, the personnel necessary for a test can be reduced.

Still further, in the case of a conventional chromatographic measurement apparatus, data of measurement information has to be discarded together with the apparatus when a positive result is obtained in a test. In contrast, since the apparatus main body and the measurement unit are separated in the invention, the data can be transferred, and this facilitates sorting out and reviewing the test results.

## Claims

1. A chromatographic measurement apparatus (1) for measuring a test agent contained in a sample solution, the apparatus comprising:
an apparatus main body (2); and
at least one measurement unit (3) adapted for measuring the test agent, the measurement unit (3) comprising an
insoluble carrier and including a detection area capable of specifically immobilizing the test agent,
wherein the apparatus main body (2) and each of the at least one measurement unit (3) are configured to be capable of wireless communication of a signal representing measurement information obtained by the measurement unit (3) and capable of mutual pairing setting involving authentication prior to establishing connection,
wherein the apparatus main body (2) comprises
a storage section (17) adapted for storing the measurement information,
an extracting section (18) adapted for extracting, from a signal obtained via wireless communication, a signal from the measurement unit (3) paired with the apparatus main body (2) based on the pairing setting, and
a display section (11) adapted for displaying the measurement information, **characterized in that**
each of the at least one measurement units (3) transmits a positive detection
history of the test agent of the measurement unit (3) via wireless communication, the positive detection history being contained in the measurement information, and
the apparatus main body (2) issues a warning when it is determined that the measurement unit (3) having the positive detection history has approached to the apparatus main body (2) based on the content and intensity of the signal, regardless of whether or not the measurement unit (3) is paired with the apparatus main body (2).

2. The chromatographic measurement apparatus (1) as claimed in claim 1, wherein number of the at least one measurement unit (3) is two or more.

3. The chromatographic measurement apparatus (1) as claimed in any one of claims 1-2, wherein the pairing setting is achieved via non-contact proximity connection.

## Patentansprüche

1. Chromatographie-Messvorrichtung (1) zum Messen eines Testmittels, das in einer Probenlösung beinhaltet ist, wobei die Vorrichtung umfasst:
einen Vorrichtungshauptkörper (2); und
mindestens eine Messeinheit (3), die dazu angepasst ist, das Testmittel zu testen,
wobei die Messeinheit (3) einen nicht löslichen Träger umfasst und eine Detektionsfläche beinhaltet, die dazu in der Lage ist, speziell das Testmittel zu demobilisieren,
wobei der Vorrichtungshauptkörper (2) und jede der mindestens einen Messeinheit (3) dazu ausgestaltet sind, ein Signal, das Messinformation darstellt, die durch die Messeinheit (3) gewonnen wurde, kabellos kommunizieren zu können und gegenseitige Verbindungseinstellung, die eine Authentifikation vor dem Aufbau der Verbindung beinhaltet, kommunizieren zu können,
wobei der Vorrichtungshauptkörper (2) umfasst:
einen Speicherabschnitt (17), der dazu angepasst ist, Messinformationen zu speichern,
einen Extraktionsabschnitt (18), der dazu angepasst ist, aus einem Signal, das durch kabellose Kommunikation erhalten wurde, ein Signal von der Messeinheit (3), die mit dem Vorrichtungshauptkörper (2) verbunden ist, auf der Verbindungseinstellung basierend zu extrahieren, und
einen Anzeigeabschnitt (11), der dazu angepasst ist, Messinformationen anzuzeigen,
**dadurch gekennzeichnet, dass**
jede der mindestens einen Messeinheiten (3) eine positive Detektionshistorie des Testmittels der Messeinheit (3) via kabelloser Kommunikation übermittelt, wobei die positive Detektionshistorie in der Messinformation enthalten ist, und
der Vorrichtungshauptkörper (2) auf dem Inhalt und der Intensität des Signals basierend einen Warnung ausgibt, wenn bestimmt wird, dass die Messeinheit (3), welche die positive Detektionshistorie aufweist, an den Vorrichtungshauptkörper (2) angenähert ist, unabhängig davon, ob die Messeinheit (3) mit dem Vorrichtungshauptkörper (2) verbunden ist oder nicht.

2. Chromatographie-Messvorrichtung (1) nach Anspruch 1, wobei die Anzahl der mindestens einen Messeinheit (3) zwei oder größer ist.

3. Chromatographie-Messvorrichtung (1) nach Anspruch 1 oder 2, wobei die Verbindungseinstellung mittels einer Nicht-Kontakt-Nachverbindung erreicht wird.

## Revendications

1. Appareil de mesure par chromatographie (1) pour mesurer un agent d'essai contenu dans une solution d'échantillon, l'appareil comprenant :
un corps principal d'appareil (2) ; et
au moins une unité de mesure (3) adaptée pour mesurer l'agent d'essai, l'unité de mesure (3) comprenant un support insoluble et comportant une zone de détection capable d'immobiliser spécifiquement l'agent d'essai,
dans lequel le corps principal d'appareil (2) et chacune de l'au moins une unité de mesure (3) sont configurés pour être capables d'une communication sans fil d'un signal représentant des informations de mesure obtenues par l'unité de mesure (3) et capables d'un réglage d'appariement mutuel impliquant une authentification antérieure à l'établissement de la connexion,
dans lequel le corps principal d'appareil (2) comprend
une section de stockage (17) adaptée pour stocker les informations de mesure,
une section d'extraction (18) adaptée pour extraire, à partir d'un signal obtenu via une communication sans fil, un signal provenant de l'unité de mesure (3) appariée au corps principal d'appareil (2) sur la base du réglage d'appariement, et
une section d'affichage (11) adaptée pour afficher les informations de mesure,
**caractérisé en ce que**
chacune de l'au moins une unité de mesure (3) transmet un historique de détection positive de l'agent d'essai de l'unité de mesure (3) via une communication sans fil, l'historique de détection positive étant contenu dans les informations de mesure, et
le corps principal d'appareil (2) émet un avertissement lorsqu'il est déterminé que l'unité de mesure (3) ayant l'historique de détection positive s'est approchée du corps principal d'appareil (2) sur la base du contenu et de l'intensité du signal, indépendamment du fait que l'unité de mesure (3) soit appariée ou non au corps principal d'appareil (2).

2. Appareil de mesure par chromatographie (1) tel que revendiqué dans la revendication 1, dans lequel le nombre de l'au moins une unité de mesure (3) est supérieur ou égal à deux.

3. Appareil de mesure par chromatographie (1) tel que revendiqué dans l'une quelconque des revendications 1 et 2, dans lequel le réglage d'appariement est réalisé via une connexion de proximité sans contact.
